# EUROPÄISCHE PATENTANMELDUNG

(11) **EP 2 336 449 A2**
(43) Veröffentlichungstag der Anmeldung: **22.06.2011**
(21) Anmeldenummer: 10015563.9
(22) Anmeldetag: 13.12.2010
(51) Int. Cl.: E04D 1/28, E04D 1/34

(54) **Dachverband mit Nut-Feder-Verbindung zwischen Dachziegeln und Schienenförmigem Bauteil**

(30) Priorität: 15.12.2009 AT 19882009
(71) Anmelder: Deutsch, Sabine Mag. (FH), 6075 Tulfes (AT)
(72) Erfinder: Tilg, Hubert, 6465 Nassereith (AT); Ausserlechner, Georg, 6176 Völs (AT)
(74) Vertreter: Gangl, Markus

(57) **Zusammenfassung**

Dachverband (50) mit wenigstens zwei Dachziegeln (1, 2), die über wenigstens eine Nut-Feder-Verbindung (8) miteinander verbunden bzw. verbindbar sind, wobei zur Herstellung der wenigstens einen Nut-Feder-Verbindung (8) zwischen den beiden Dachziegeln (1, 2) ein zwischen den Dachziegeln (1, 2) angeordnetes, gesondertes, schienenförmiges Bauteil (3) vorgesehen ist, wobei die wenigstens eine Nut-Feder-Verbindung (8) zwischen Jedem der wenigstens zwei Dachziegel (1, 2) und dem gesonderten, schienenförmigen Bauteil (3) unabhängig vom jeweils anderen Dachziegel (1, 2) herstellbar und lösbar ist, wobei das schienenförmige Bauteil (3) eine Nut (81) aufweist und die wenigstens zwei Dachziegel (1, 2) über vorzugsweise längsseitige Federn (82, 83) in diese Nut (81) eingreifen, wobei im oder am schienenförmigen Bauteil (3) ein Entwässerungskanal (10) als freibleibender Teil der Nut (81) ausgebildet ist, der tiefer als die eingreifenden Federn (82, 83) der wenigstens zwei Dachziegel (1, 2) ausgebildet ist.

## Beschreibung

Die Erfindung betrifft einen Dachverband mit wenigstens zwei Dachziegeln, die über wenigstens eine Nut-Feder-Verbindung miteinander verbunden bzw. verbindbar sind.

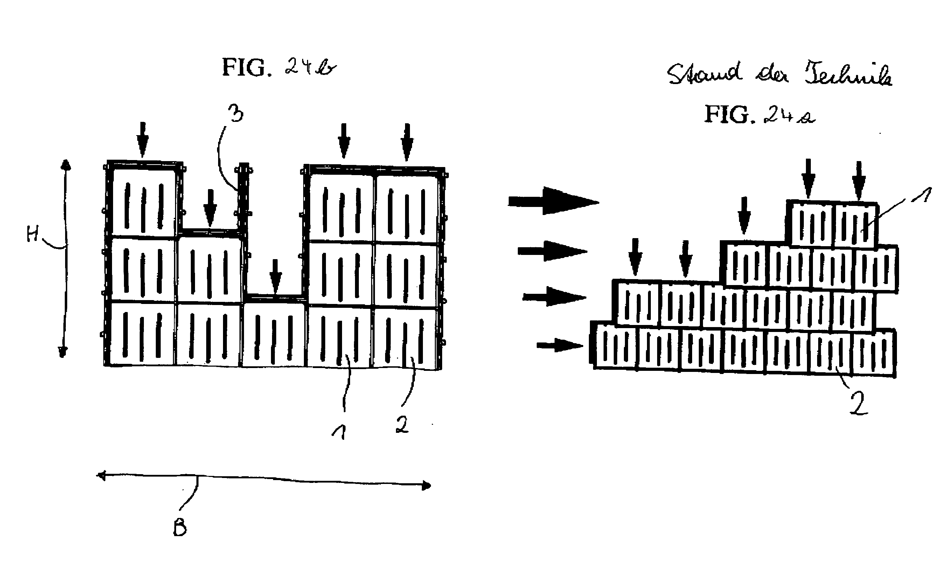

Ein derartiger Dachverband ist beispielsweise aus der prioritätsälteren und nachveröffentlichten AT 506 953 B1 bekannt. Aus dieser Schrift gehen einzelne Dachziegel hervor, die über in deren Isolierkörper ausgebildete Nuten und Federn aufeinanderlegbar und zusammenfügbar sind. Als ein wesentlicher Nachteil bei diesem Dachverband hat sich herausgestellt, dass der Austausch von einzelnen defekten Dachziegeln sehr aufwändig ist. Um einen bestimmten Dachziegel - vor allem im unteren Bereich des Daches - auszutauschen, ist das Abdecken mehr oder weniger der ganzen oberen Reihen notwendig (siehe Fig. 24a). Zudem können sich durch die versetzte Anordnung Wasseransammlungen hinter den Ziegeln bilden, wenn beispielsweise Wasser zwischen zwei Längs- oder Breitseiten der oberen Ziegel eintritt. Weiters ist es nachteilig, wenn die vorgegebene Dachkonstruktion unterhalb der einzelnen Dachziegel nicht eben Ist, da sich dann Verwerfungen auf der Oberfläche des Dachverbandes ergeben können.

Insbesondere betrifft die Erfindung einen Dachverband, wobei zur Herstellung der wenigstens einen Nut-Feder-Verbindung zwischen den beiden Dachziegeln ein zwischen den Dachziegeln angeordnetes, gesondertes, schienenförmiges Bauteil vorgesehen ist, wobei die wenigstens eine Nut-Feder-Verbindung zwischen jedem der wenigstens zwei Dachziegel und dem gesonderten, schienenförmigen Bauteil unabhängig vom jeweils anderen Dachziegel herstellbar und lösbar ist, wobei das schienenförmige Bauteil eine Nut aufweist und die wenigstens zwei Dachziegel über vorzugsweise längsseitige Federn in diese Nut eingreifen. Es müssen nicht mehr die einzelnen, nebeneinander angeordneten Dachziegel unmittelbar aufeinander liegen (sich überlappen), sondern diese bilden jeweils separat mit dem schienenförmigen Bauteil eine Nut-Feder-Verbindung. Ein derartiges Bedeckungssystem geht aus der NL 1 025 787 hervor.

Die Aufgabe der vorliegenden Erfindung liegt daher darin, einen gegenüber dem Stand der Technik verbesserten Dachverband anzugeben. Insbesondere soll eine leichtere und einfachere Austauschbarkeit der einzelnen Ziegel gegeben sein. Zudem soll vorzugsweise ein günstiger Wasserablauf für zwischen die Ziegel eintretendes Wasser gegeben sein. Weiters soll bevorzugt eine exakte und gleichmäßige Anordnung der einzelnen Ziegel möglich sein.

Diese Aufgaben werden durch einen Dachverband mit den Merkmalen des Anspruchs 1 gelöst, wobei erfindungsgemäß im schienenförmigen Bauteil ein Entwässerungskanal ais freibielbender Tell der Nut ausgebildet ist, der tiefer als eingreifende Federn der wenigstens zwei Dachziegel ausgebildet ist. Dadurch wird erreicht, dass zwischen dem tiefsten Punkt der Feder und dem tiefsten Punkt der Nut ein kleiner Spalt frei bleibt, durch den unerwünschterweise eingetretenes Wasser abfließen kann. Somit bildet das schienenförmige Bauteil einen wichtigen Teil der später noch näher erläuterten zweiten Wassertrennebene im gesamten Dachverband.

Weitere vorteilhafte Ausführungen der Erfindung sind in den abhängigen Ansprüchen definiert.

Gemäß einem bevorzugten Ausführungsbeispiel kann dabei vorgesehen sein, dass im schienenförmigen Bauteil zwei separate Nuten für die Federn der Dachziegel ausgebildet sind. Bevorzugt ist allerdings eine breite Nut im schienenförmigen Bauteil vorgesehen, welche beide Federn der beiden Dachziegel nebeneinander aufnehmen kann. Bevorzugt weist dabei das schienenförmige Bauteil eine relativ breite zentrale Nut auf, in die beide längsseitigen Federn der Dachziegel aneinander angrenzend einlegbar sind. Daraus ergibt sich auch bereits der Vorteil, dass in diesem Bereich, wo die beiden schmalen Federn der Dachziegel in die Nut eingreifen, eintretendes Wasser in der Bauteilnut gezielt abgeführt werden kann. Es könnte auch ein gesonderter Entwässerungskanal im schienenförmigen Bauteil vorgesehen sein.

Es soll nicht ausgeschlossen werden, dass derartige schienenförmige Bauteile breitseitig entlang des Daches oder schräg an diesem angeordnet sind, jedoch ist bevorzugt vorgesehen, dass die schienenförmigen Bauteile parallel zur Dachschräge/Dachhöhe längs von unten nach oben angeordnet sind, wodurch die wenigstens zwei Dachziegel nebeneinander entlang der Dachbreite im Dachverband angeordnet sind. Bevorzugt ist dabei vorgesehen, dass das schienenförmige Bauteil über die gesamte Dachhöhe ausgebildet ist.

Vor allem, um den Eindruck eines Schindeldaches zu erwecken, kann vorgesehen sein, dass wenigstens zwei Dachziegel übereinander, das heißt in Richtung der Dachhöhe, vorzugsweise entlang der Breitseite überlappend, am selben schienenförmigen Bauteil angeordnet sind.

Vor allem wenn bereits Dachquerträger an einem entsprechenden Gebäude angebracht sind, kann vorgesehen sein, dass das schienenförmige Bauteil selbst als Dachsparre einer Dachtragekonstruktion ausgebildet ist. Dadurch können die schienenförmigen Bauteile quer zu den Dachquerträgern entlang der Dachhöhe angebracht werden und somit einen Teil der Dachtragekonstruktion selbst bilden und die Herstellung des Daches daher verbilligen.

Alternativ kann aber auch vorgesehen sein, dass das schienenförmige Bauteil gesondert von den wenigstens zwei Dachziegeln an einer Dachtragekonstruktion befestigt bzw. befestigbar ist. Dabei werden die schienenförmigen Bauteile auf die bereits vorgefertigte Dachkonstruktion (Verschalung aus Dachbrettem) aufgebracht.

Um ein einfaches Halten der auf die schienenförmigen Bauteile aufgebrachten Dachziegel zu erreichen, kann vorgesehen sein, dass beidseitige Erhöhungen die Nut im schienenförmigen Bauteil begrenzen. In Längsrichtung der beidseitigen Erhöhung sind, vorzugsweise in regelmäßigen Abständen, Haltestufen ausgebildet sind. Durch diese Haltestufen, die beispielsweise im Abstand von ca. 10 bis 20 cm angebracht sind, rasten die einzelnen Dachziegel durch entsprechende Gegenstufen an ihrer Unterseite am schienenförmigen Bauteil ein. Diese Haltestufen bilden zusätzlich eine Art Rastermaß für mögliche Ablängungen der einzelnen schienenförmigen Bauteile. Generell werden durch diese Haltestufen eine Verrutschsicherung und eine Verringerung von Querkräften auf die Befestigungsschraube erreicht.

Weiters kann vorgesehen sein, dass die Nut ein zentrales Plateau aufweist, in welchem die wenigstens zwei Dachziegel über Befestigungsmittel befestigbar sind, wobei unterhalb des zentralen Plateaus im schienenförmigen Bauteil ein Einlegekern ausgebildet. Dieser Einlegekern bietet eine zusätzliche Fixierung des eingebrachten Befestigungsmittels (bevorzugt Schraube). Zudem kann gegebenenfalls zumindest ein Teil der Federn der beiden eingebrachten Dachziegel auf diesem Plateau aufliegen.

Durch das zentrale Plateau können einerseits Rückstände, die beim Einschrauben entstehen, auf dem Plateau gehalten werden, wodurch ein möglicher Wasserrückstau durch sich ansammelndes Material im Kanal verhindert wird. Zum anderen wird der eigentliche Verschraubungspunkt durch die Plateauhöhe zum größten Teil vom Wasser freigehalten.

Um eine gute Fixierung und Anbringung der einzelnen Dachziegel an der Dachkonstruktion zu erreichen, kann vorgesehen sein, dass die wenigstens zwei Dachziegel das schienenförmige Bauteil teilweise überdecken, wobei die wenigstens zwei Dachziegel über eine zwischen den Dachziegeln einbringbares Befestigungsmittel am schienenförmigen Bauteil beispielsweise verschraubbar sind. Daraus ergeben sich zwei Vorteile: Erstens muss kein Dachziegel direkt mit der Dachunterkonstruktion verbunden werden, sodass sich keine Wärmebrücke bildet. Zweitens werden mit einer einzigen Schraube zwei Dachziegel am schienenförmigen Bauteil fixiert. Das schienenförmige Bauteil selbst kann ist wiederum über separate Befestigungselemente an der Dachunterkonstruktion befestigt werden.

Bevorzugterweise ist allerdings vorgesehen, dass pro Schiene und zwei nebeneinander angeordneten Dachziegel zumindest zwei Befestigungsschrauben (im oberen und im unteren Bereich) vorgesehen sind. Da dies auf jeder benachbarten Schiene dann wiederum der Fall ist, ist jeder Dachziegel längsseitig vierfach mit dem schienenförmigen Bauteil verbunden, wobei aber insgesamt nur die doppelte Menge von Befestigungsschrauben als die Anzahl der Dachziegel notwendig ist (bis auf den Randbereich des Daches). Vor allem an besonders kraftbelasteten Bereichen des Dachverbandes (zum Beispiel Rand) können natürlich auch mehr Befestigungspunkte vorgesehen sein. In gering belasteten Bereichen (zum Beispiel Mitte) kann auch ein einziger Befestigungspunkt ausreichen.

Ein weiterer wesentlicher Vorteil bei der Anbringung der Dachziegel am schienenförmigen Bauteil liegt darin, dass die einzelnen Dachziegel allesamt bohrlochlos ausgeführt werden können, da die wenigstens zwei Dachziegel längsseitig aneinander angrenzen, wobei vorzugsweise in zumindest einer der längsseitigen Oberflächen eine nicht rundum geschlossene Vertiefung zur Führung der einbringbaren Befestigungsschraube ausgebildet ist.

Um die Fixierung von zwei Dachziegeln mit nur einer Befestigungsschraube zu erreichen, ist bevorzugt vorgesehen, dass der Kopf der Befestigungsschraube auf beiden Dachziegeln, vorzugsweise an deren witterungsbeständiger Außenhaut, gegebenenfalls über eine Kalotte, kraftschlüssig anliegt.

Die eigentliche Befestigung kann dadurch erfolgen, dass ein Befestigungsmittel (zum Beispiel eine Befestigungsschraube) durch Einschrauben unter Ausbildung eines Bohrlochs im schienenförmigen Bauteil formschlüssig hält, wobei im schlenenförmigen Bauteil ein vorzugsweise durch die gesamte Länge des Bauteils durchreichender, fester Einlegekern (beispielsweise aus Polyurethan) ausgebildet ist. Das schienenförmige Bauteil selbst kann zumindest zweiteilig ausgeführt sein, wobei ein Teil vorzugsweise ein PU-Schaumkem ist und ein Teil ein Einlegekem. Zudem können Befestigungselemente (zum Beispiel Haltewinkel) integriert sein, die aber keine Wärmebrücke bilden und somit immer thermisch entkoppelt sind.

Es können unabhängig von den bisher besprochenen Maßnahmen Verstärkungseinlagen, wie beispielsweise Gewebe, Stahl oder Stahleinlagen im schienenförmigen Bauteil integriert sein, um die Verwendung der schienenförmigen Bauteile als Dachsparren und/oder Querträger zu ermöglichen. Diese Verstärkung ist insbesondere für die Dachsparren- und/oder Querträgerverwendung von Vorteil, kann jedoch allgemein vorgesehen sein.

Ganz allgemein können die schienenförmigen Bauteile aus Holz, Aluminium, Plastik oder Ähnlichem hergestellt sein.

Schutz wird auch begehrt für die einzelnen Komponenten des Dachverbandes, wie für die schienenförmigen Bauteile gemäß Anspruch 14 und 15 und dem Dachziegel für den Dachverband gemäß Anspruch 16. Beide Teile weisen dabei jeweils die korrespondierenden Teile der Nut-Feder-Verbindung auf, um sämtliche erfindungsgemäßen Vorteile erreichen zu können.

Gemäß einem bevorzugten Ausführungsbeispiel kann vorgesehen sein, dass der Dachziegel einen aus Schaumkunststoff bestehenden Isolierkörper (Trägerkörper) zur thermischen Isolation des Dachverbandes aufweist, wobei der Isolierkörper an die Außenhaut angeschäumt ist und mit dieser einen mechanischen Verbund bildet, wobei der Isolierkörper auf seiner der Deckfläche abgewandten Seite frei von der witterungsbeständigen Außenhaut ist.

Weiters kann bevorzugt vorgesehen sein, dass der Trägerkörper aus Schaumkunststoff besteht und einen Isolierkörper zur thermischen Isolation des Dachverbandes bildet, wobei der Isolierkörper auf seiner zur Deckfläche des Dachziegels gerichteten Seite eine Wanne bildet, wobei die Außenhaut rahmenförmig ausgebildet ist und den zentralen Bereich der Deckfläche des Dachziegels frei lässt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Es zeigen:

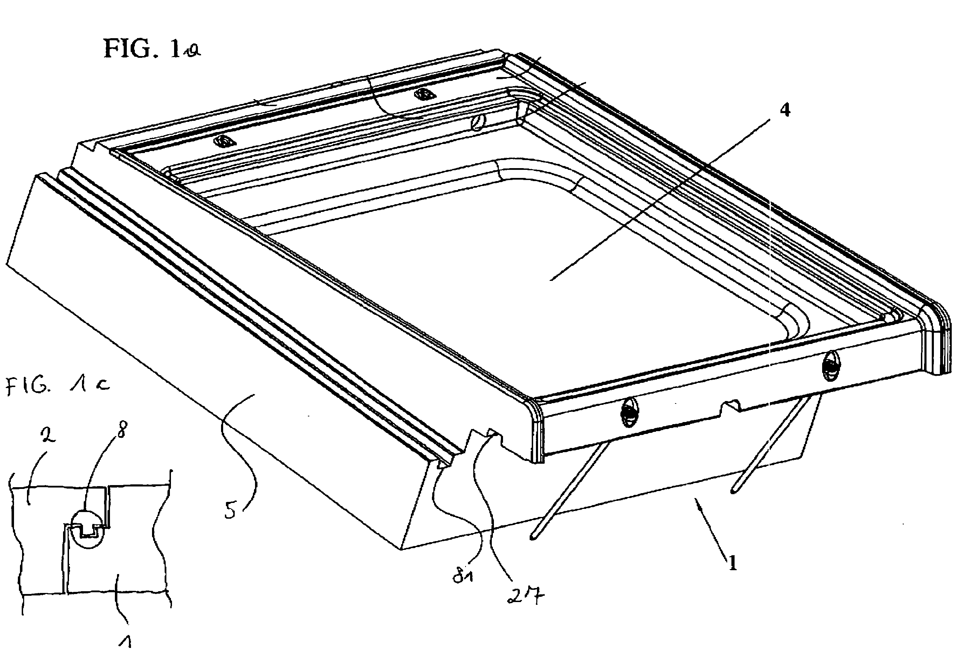

- Fig. 1a und 1c: einen Dachziegel nach dem Stand der Technik,
- Fig. 1 b: einen Querschnitt durch einen mehrschichtigen Dachziegel,
- Fig. 2: die Ansicht eines mehrschichtigen Dachziegels,
- Fig. 3a bis 3c: diverse Ansichten des Dachziegels,
- Fig. 4a bis 4e: diverse Ansichten und Detailausschnitte des Dachziegels,
- Fig. 5a bis 5f: den Schichtaufbau des Dachziegels,
- Fig. 6a bis 6c: Ansichten und Draufsichten auf die zweite Isolierschicht,
- Fig. 7a bis 7e: den Dachverband im Querschnitt und Detailausschnitte,
- Fig. 8a und 8b: Längsschnitte durch den Überlappungsbereich der Dachziegelbreitseite,
- Fig. 9a bis 11d: diverse Ansichten und Details des Dachverbands,
- Fig. 12a bis 12f: Ansichten und Schnitte des schienenförmigen Bauteils,
- Fig. 13 bis 21: einzelne Verfahrensschritte des Herstellungsverfahrens,
- Fig. 22a, 22b: ein Dach mit vorgefertigter Dachtragekonstruktion,
- Fig. 23a, 23b: eine Dachkonstruktion, bei der die schienenförmigen Bauteile die Dachsparren bilden,
- Fig. 24a,: eine Dachziegelanordnung nach dem Stand der Technik,
- Fig. 24b: die neuartige Dachziegelanordnung und
- Fig. 25: eine Draufsicht auf die Dachziegel mit Darstellung der Wasserablaufrichtungen.

Fig. 1a und 1c zeigt einen Dachziegel 1 und eine Nut-Feder-Verbindung 8 nach dem Stand der Technik, wobei dieser ebenfalls eine Außenhaut 4 und einen Isolierkörper 5 aufweist. Im Isolierkörper 5 selbst sind dabei die Längsseitennut 81 und die Breitseitennut 27 ausgebildet. Bei diesem Stand der Technik werden benachbarte Dachziegel 1 und 2 direkt über deren Isolierkörper 5 und den entsprechenden Nut-Feder-Verbindungen miteinander verbunden. Dies bringt die Nachteile, dass einzelne Dachziegel nur umständlich ausgetauscht werden können, eine schlechte Wasserableitung für eintretendes Wasser gegeben ist sowie ein ebener Untergrund zur exakten Anbringung bereits vorgegeben sein muss. Der Nachteil des gezeigten, relativ dicken Schaumkunststoffisolierkörpers liegt dabei in der relativ schwierigen Herstellung eines einzelnen so dicken geschäumten Teiles. Durch die chemischen Reaktionen bei dicken Isolierkörpern (ca. 20 cm) ist die entstehende Reaktionshitze sehr schwer abführbar, da die Masse relativ zur wärmeableitenden Oberfläche sehr groß ist.

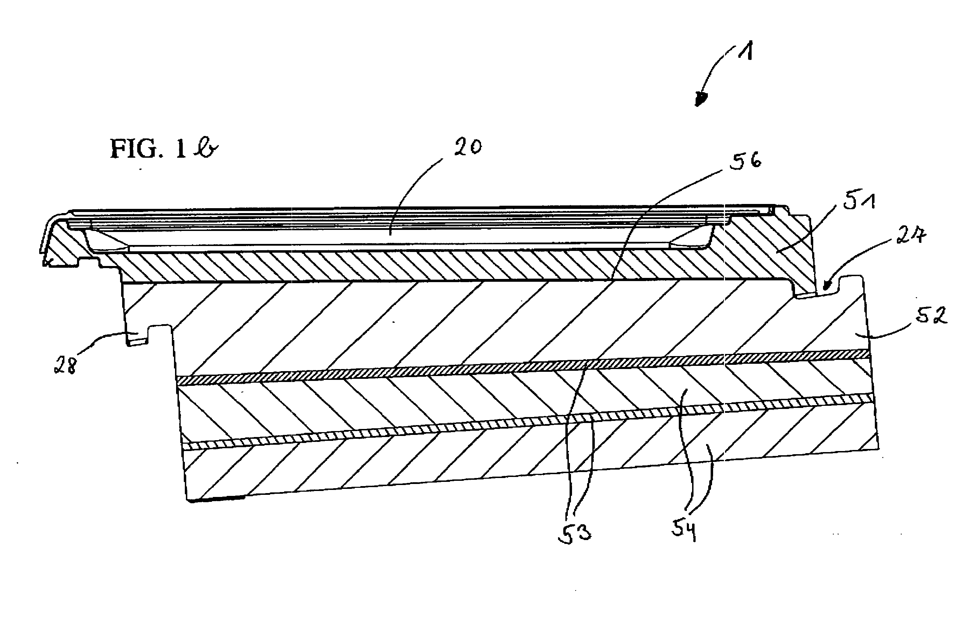

Demgegenüber zeigt Fig. 1b einen Längsschnitt durch den Dachziegel 1 mit einem als Isolierkörper 5 ausgeführten Trägerkörper und einem schichtförmigem Aufbau des Isolierkörpers 5. Der Isolierkörper 5 weist zumindest die erste 51 und zweite 52 Isolierschicht auf, wobei bevorzugt die erste Isolierschicht 51 an der Außenhaut 4 (welche die erste wasserführende Ebene 91 bildet) angeklebt oder angeschäumt ist. Die zweite Isolierschicht 52 kann bereits vorgefertigt (beispielsweise aus Styropor) oder vorgeschäumt sein. Diese Schicht 52 weist bereits die endgültige Form auf. Gemäß dieser Fig. 1b sind an der außenhautabgewandten Seite der Isolierschicht 52 zwei weitere Zwischenschichten 53 und zwei sonstige Schichten 54 angebracht, wobei diese beispielsweise dem Schallschutz, der Dämmung oder der Stabilität dienen können. In diesem Isolierkörper 5 sind generell die breitseitigen Nuten 27 und Federn 28 ausgebildet. Die einzelnen Schichten können beispielsweise aus Styropor, PU, sonstigem Dämmmaterial, Weichschaum, Weichschaum, Mineralvliesplatten oder Ähnlichem hergestellt sein.

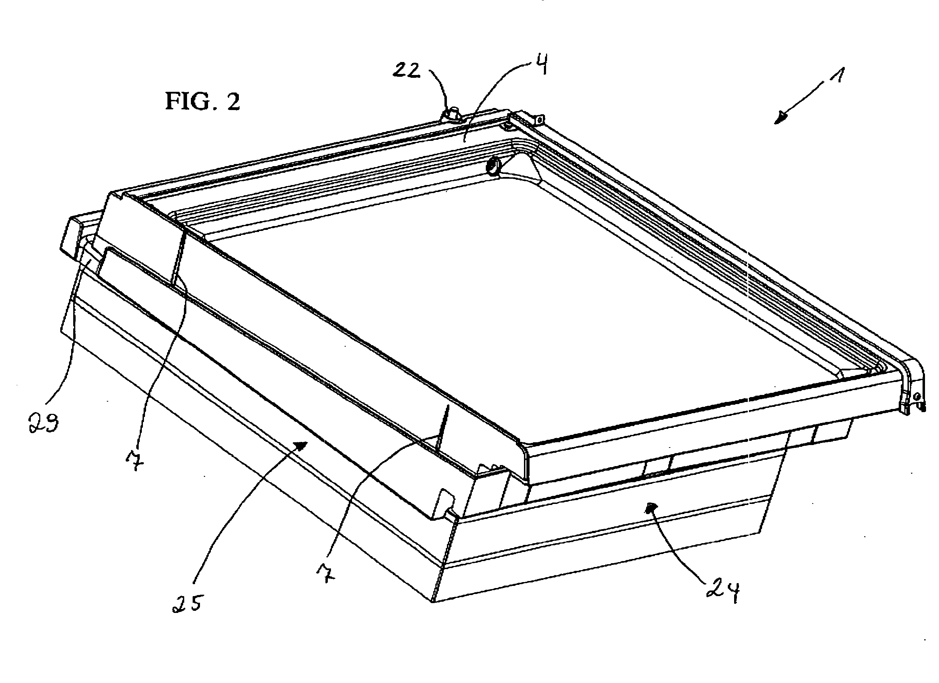

Fig. 2 zeigt eine Ansicht dieses Dachziegels 1, wobei die Außenhaut 4 einen wannenförmigen Bereich zur Aufnahme eines hier nicht dargestellten Solarelements 20 aufweist, wobei bereits die Anschlussstücke 22 dargestellt sind. Wichtig sind an der längsseitigen Oberfläche 25 des Isolierkörpers 5 die bereits ausgebildeten Vertiefungen 7, die der späteren Führung der Befestigungsschrauben 6 beim Anbringen des Dachziegels 1 dienen. Die Breitseite des Dachziegels 1 ist mit 24 bezeichnet. Mit 29 ist in dieser Fig. 2 eine Freistellung für den Wasserablauf von der Breitseitennut 27 in ein darunter liegendes schienenförmiges Bauteil 3 angegeben.

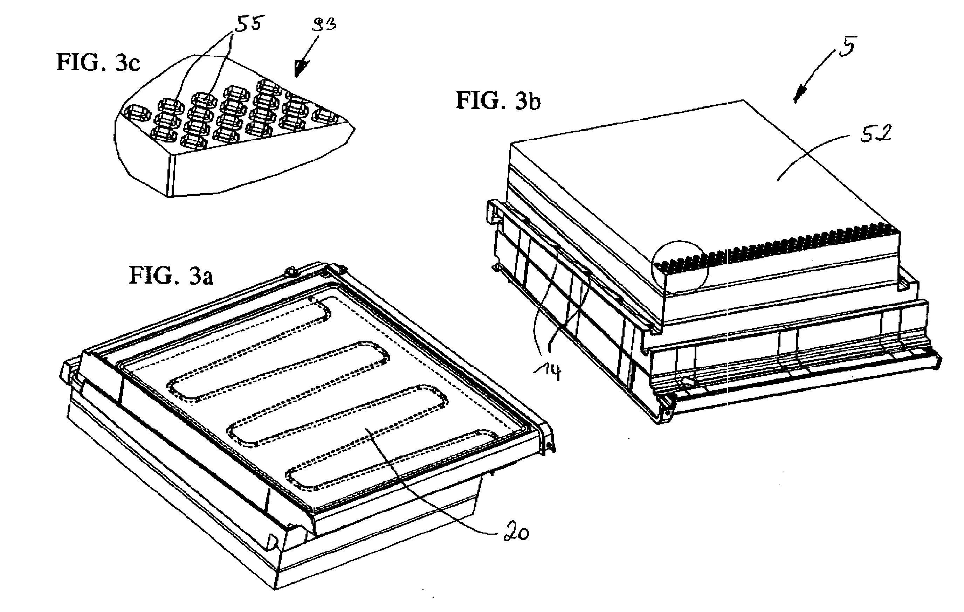

Fig. 3a zeigt eine Ansicht des Dachziegels 1, wobei das Solarelement 20 mit Fluidleitungen dargestellt ist. In Fig. 3b Ist der gesamte Isolierkörper 5 bzw. Isollerschicht 52 von unten dargestellt, wobei darauf die Noppenstruktur 55 erkennbar ist. Ober diese Noppenstruktur 55 liegt der Dachziegel 1 an einer Verschalung 71 auf. Durch diese Struktur wird zwischen der Verschalung 71 (Dachtragekonstruktion 70) und den Dachziegeln 1 eine dritte wasserführende Ebene 93 als Drainage gebildet. Zudem bildet diese Noppenstruktur 55 auch einen Schallschutz.

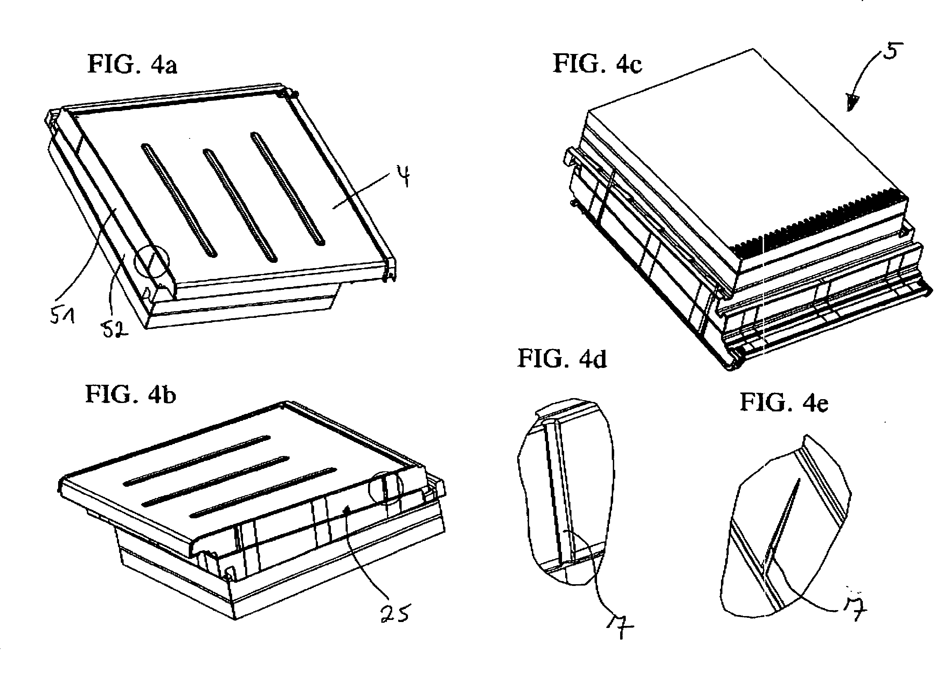

In den Fig. 4a bis 4e sind nochmals Details des erfindungsgemäßen Dachziegels 1 gezeigt, wobei insbesondere die Vertiefungen 7 als Befestlgungsschraubenführung beim Montieren der Dachziegel 1, 2 im Detail dargestellt sind.

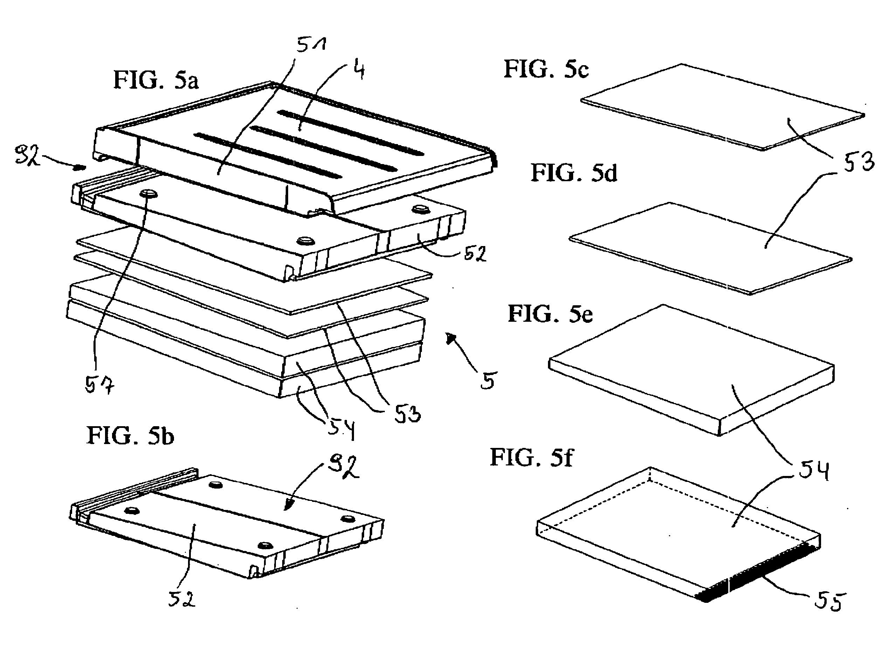

Die Fig. 5a bis 5f zeigen die einzelnen Schichten eines besonders bevorzugten Ausführungsbeispiels des hierin beschriebenen Dachziegels 1. Dieser weist von oben nach unten gesehen eine Außenhaut 4, eine erste Isolierschicht 51, eine zweite Isolierschicht 52 mit Führungsnoppen, zwei Zwischenschichten 53 und zwei weitere Schichten 54 auf. Die Isolierschicht 52 mit den darunter liegenden Zwischenschichten 54 und weiteren Schichten 53 können als separates Bauteil ausgeführt sein, sodass die unteren Teile 52, 53, 54 unabhängig vom oberen Teil 51 mit Außenhaut 4 auf dem Dach montiert werden kann. Die sich hier bildende Zwischenebene (Oberfläche von Isolierschicht 52) kann die zweite wasserführende Ebene 92 mitbilden. Um das nachträgliche Anbringen des oberen Teils mit der Isolierschicht 51 und der Außenhaut 4 zu erleichtern, sind an der Isolierschicht 52 Führungsnoppen 57 mit entsprechenden, nicht dargestellten Gegenstücken an der Unterseite der Isolierschicht 51 vorgesehen.

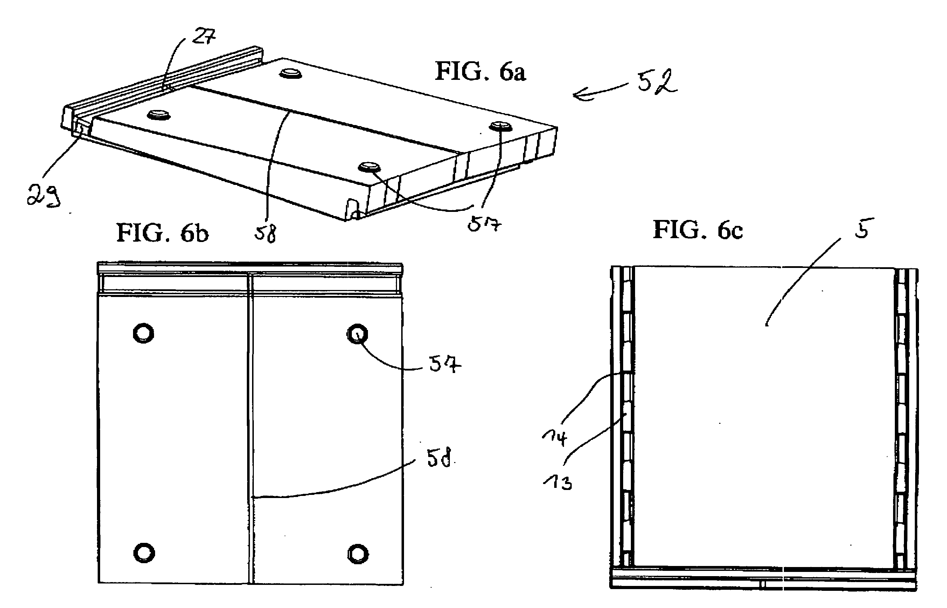

Fig. 6a zeigt die Isolierschicht 52, die im hinteren Breitseitenbereich 24 die Breitseitennut 27 aufweist. Diese bildet die zweite wasserführende Ebene 92 (die Außenhaut 4 bildet die erste wasserführende Ebene 91). Als zusätzlicher Schutz ist diese Isolierschicht 52 leicht dachförmig ausgebildet, was aufgrund der Scheitellinie 58 und den beiden davon leicht zur Längsseite 25 abfallenden Oberflächen ersichtlich ist. Fig. 6b zeigt eine Draufsicht auf die Isolierschicht 52 samt Führungsnoppen 57 und Scheitellinie 58. Fig. 6c zeigt den gesamten Isolierkörper 5 von unten, wobei entlang der beiden Längsseiten 25 die Einraststufen 14 und Halteschrägen 13 ausgebildet sind, die an später bzw, weiter unten dargestellten schienenförmigen Bauteilen 3 und deren Haltestufen 9 verrutschsicher einrasten können.

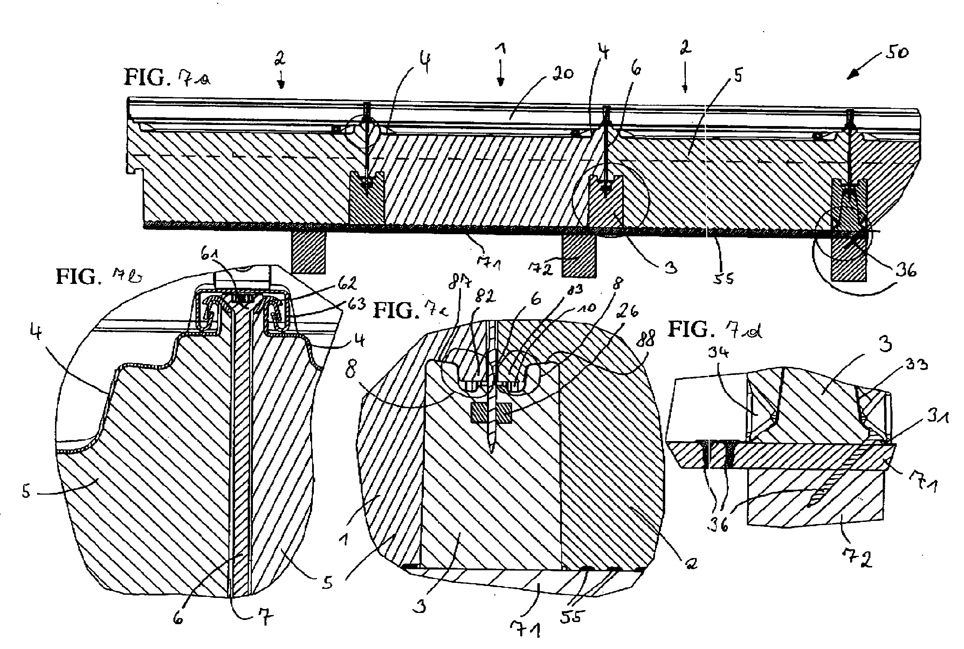

Fig. 7a zeigt einen Querschnitt durch den Dachverband 50, wobei vier nebeneinander angeordnete Dachziegel 1,2 dargestellt sind. Oberhalb des jeweiligen Isolierkörpers 5 (der natürlich auch zwei- oder mehrteilig ausgeführt sein kann, wie es durch die Strichlierung angedeutet ist) weisen diese Dachziegel 1,2 jeweils eine Außenhaut 4 und darüber angeordnet ein Solarelement 20 auf. An den jeweiligen Breitseiten 24 der Dachziegel 1,2 greifen die Dachziegel 1,2 jeweils über Federn 82, 83 in eine Nut 81 eines schienenförmigen Bauteils 3 ein. Wie dazu in Fig. 7c ersichtlich ist, greifen diese Federn 82, 83 unter Frellassung eines Entwässerungskanales 10 in die vorgeformte Nut 81 ein. Dieser Schnitt ist genau im Bereich der Befestigungsschrauben 6 dargestellt, der zwischen den Dachziegeln 1 und 2 im Bereich des zentralen Plateaus 86 in das schienenförmige Bauteil 3 eingeschraubt ist. Zur sicheren Fixierung der Befestigungsschrauben 6 ist im schienenförmigen Bauteil 3, vorzugsweise durchgehend, ein ausreißfester Einlegekern 26 vorgesehen.

Wie aus Fig. 7b ersichtlich, ist die Befestigungsschraube 6 genau Im Bereich der Führungsvertiefung 7 zwischen die Dachziegel 1,2 eingeführt und hält bzw. fixiert über den Schraubenkopf 61 und die Kalotte 62 (Zwischenscheibe, Beilagscheibe) beide Dachziegel 1,2 am schienenförmigen Bauteil 3 fest. Bevorzugt wird ein Kraftschluss vom Schraubenkopf 61 über die Kalotte 62 auf die Außenhaut 4 und weiter auf den Isolierkörper 5 erzeugt. Die Dachziegel 1,2 selbst weisen dabei kein Bohrloch auf und sind nicht direkt mit der Dachtragekonstruktion 70 verbunden, wodurch keine Wärmebrücke durch die Befestigung gegeben ist. Vielmehr sind, wie aus Fig. 7d ersichtlich, die schienenförmigen Bauteile 3 separat über Haltemittel 31 und Befestigungsmittel 36 (beispielsweise Schrauben) an der Verschalung 71 befestigt. Der Befestigungs- und Eingangsbereich der beiden Dachziegel 1 und 2 kann, wie beispielsweise in Fig. 7b dargestellt, durch eine aufgeschobene Abdeckschiene 63 zusätzlich geschützt sein. In dem Detail 7d ist der schienenförmige Bauteil 3 über das Befestigungsmittel 36 auch direkt mit der Dachsparre 72 verbunden bzw. In diesem gehalten. Alternativ oder zusätzlich wird durch die beiden linken Befestigungsmitteln 36 dargestellt, dass der schienenförmige Bauteil 3 über das Haltemittel 31 nur in der Verschalung 71 befestigt ist. Die Haltemittel 31 sind bevorzugt vereinzelt über die Länge des schienenförmigen Bauteils 3 vorgesehen.

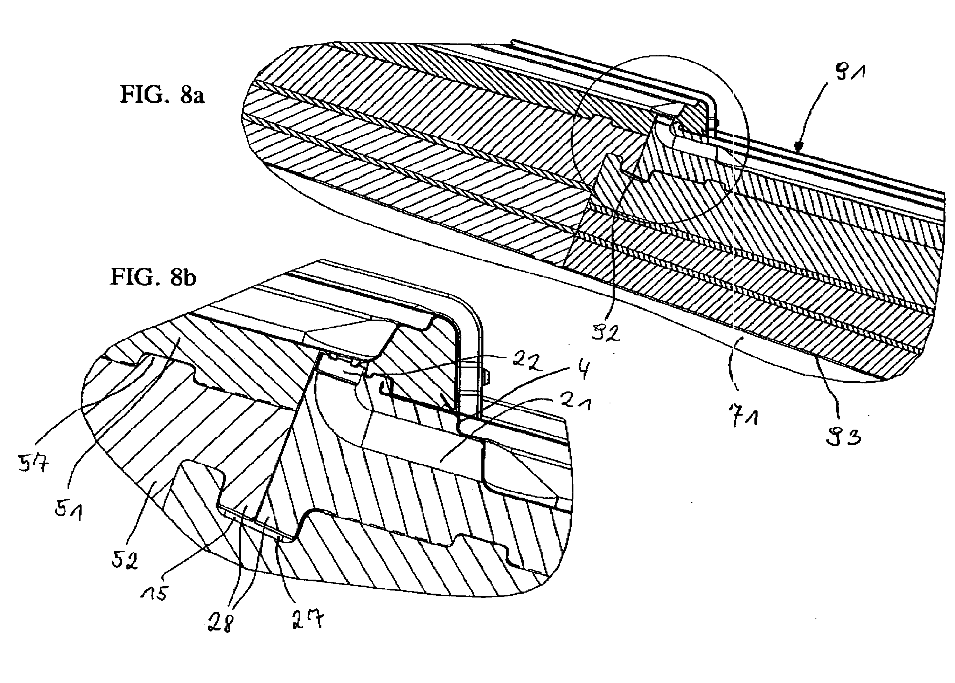

Fig. 8a zeigt die drei wasserführende Ebenen 91, 92 und 93. Die oberste, erste wasserführende Ebene 91 wird dabei im Wesentlichen durch die Außenhaut 4 gebildet. Wenn dennoch Wasser auf der Längsseite 25 und der Breitseite 24 zwischen die einzelnen Dachziegel 1,2 gelangt, ist auf der Breitseite 24 als zusätzliche zweite wasserführende Ebene 92 die Breitseitennut 27 im Isolierkörper 5 des überlappten Dachziegels 1,2 ausgebildet, wobei die eingreifende Feder 28 des überlappenden Dachziegels 1,2 einen Breitseitenentwässerungskanal 15 freilässt. Dieser kann über den Abflussbereich 29 Wasser in ein auf der Längsseite 25 und unterhalb angeordnete Nut 81 des schienenförmigen Bauteils 3 weiterleiten, wodurch diese Nuten 27 und 81 bzw. Kanäle 15 und 10 (und die Oberfläche der Isolierschicht 52) gemeinschaftlich die zweite wasserführende Ebene 92 bilden.

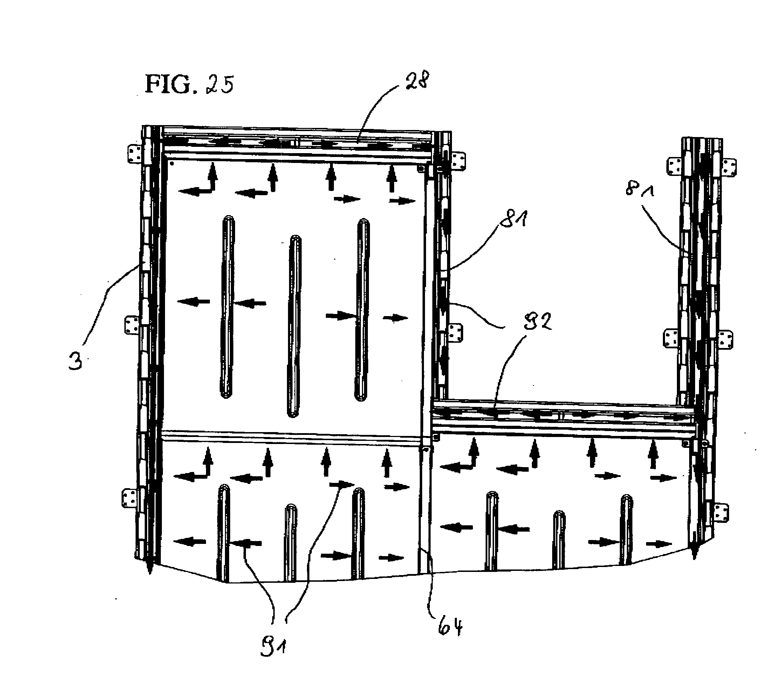

In Fig. 25 sind dazu passend mit den Pfeilen auf den Breit- und Längsseiten der Dachziegel 1,2 die Fließrichtung von eintretendem Wasser im Bereich der zweiten wasserführenden Trennebene 92 veranschaulicht. Die erste wasserführende Trennebene 91 ist durch die entsprechend bezeichneten Pfeile auf der Außenhaut 4 selbst gebildet.

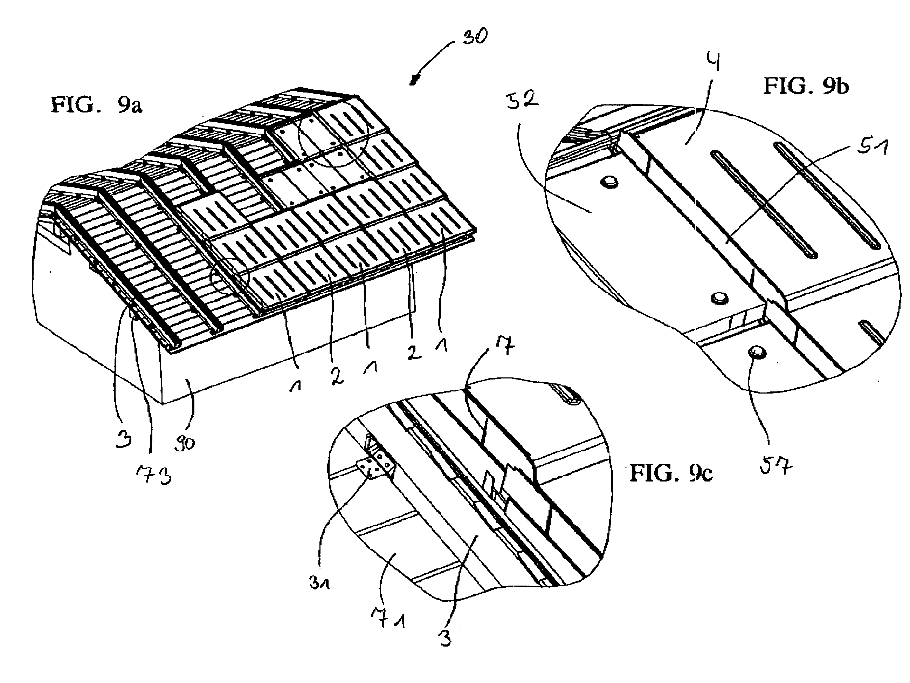

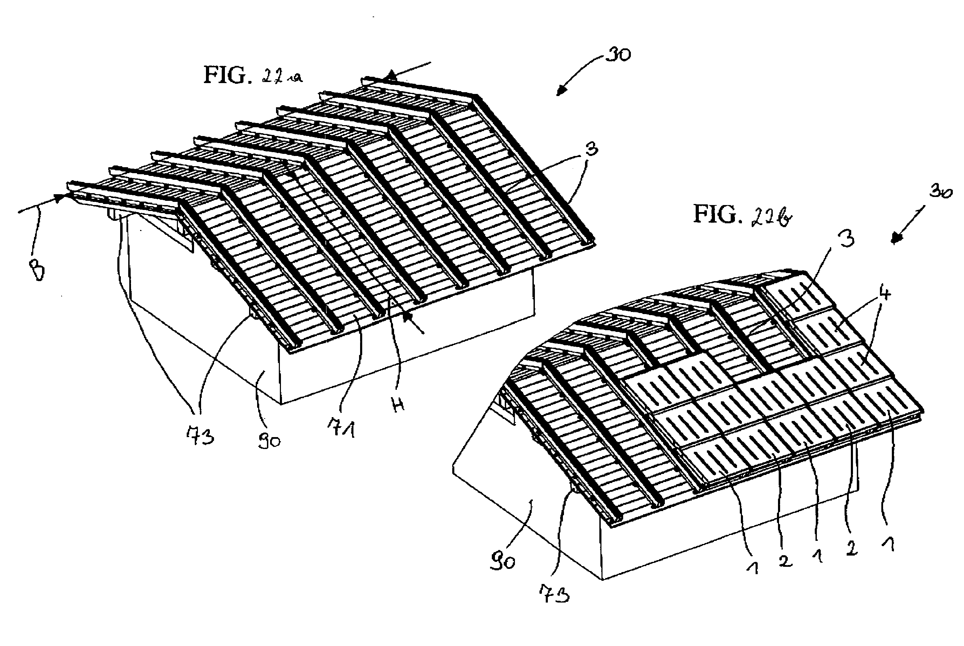

Fig. 9a und 22a und 22b zeigen ein Dach 30 eines Gebäudes 90, bei welchem die Dachtragekonstruktion 70 aus Querträgern 73, nicht dargestellten Dachsparren 72 und der Verschalung 71 besteht (die Längsausrichtung der Querträger 73 entspricht in dieser Anmeldung der Ausdehnung der Dachbreite B und die Längsausrichtung der Dachsparren 72 entspricht der Ausdehnung der Dachhöhe H). Auf dieser Dachtragekonstruktion 70 sind in Dachhöhenrichtung H die schienenförmigen Bauteile 3 angebracht. Auf diese schienenförmigen Bauteile 3 sind die einzelnen Dachziegel 1, 2 nebeneinander über Nut-Feder-Verbindungen 8 in das Bauteil 3 eingreifend angeordnet. Im Detail 9b ist erkennbar, dass die Dachziegel 1,2 selbst zweiteilig ausgeführt und am Dach 30 angebracht werden können. Das heißt, zumindest ein Teil des Isolierkörpers 5 (beispielsweise bis Isolierschicht 52) liegt auf dem schienenförmigen Bauteil 3 und der Verschalung 71 auf, wonach der obere Teil des Dachziegels (Isolierschicht 51 und Außenhaut 4) erst bei Montage am Dach auf das untere Teil aufgebracht bzw. mit diesem verbunden werden. Dies erleichtert auch den Austausch von einzelnen beschädigten oberen oder unteren Teilen der Dachziegel. Dem verrutschsicheren Positionieren dienen die Führungsnoppen 57, die mit entsprechenden Gegenstücken auf der nicht dargestellten Unterseite der Isolierschicht 51 korrespondieren. Im Detail 9c ist ersichtlich, wie das schienenförmige Bauteil 3 über die Haltemittel (hier: Befestigungslaschen 31) an der Verschalung 71 befestigbar ist.

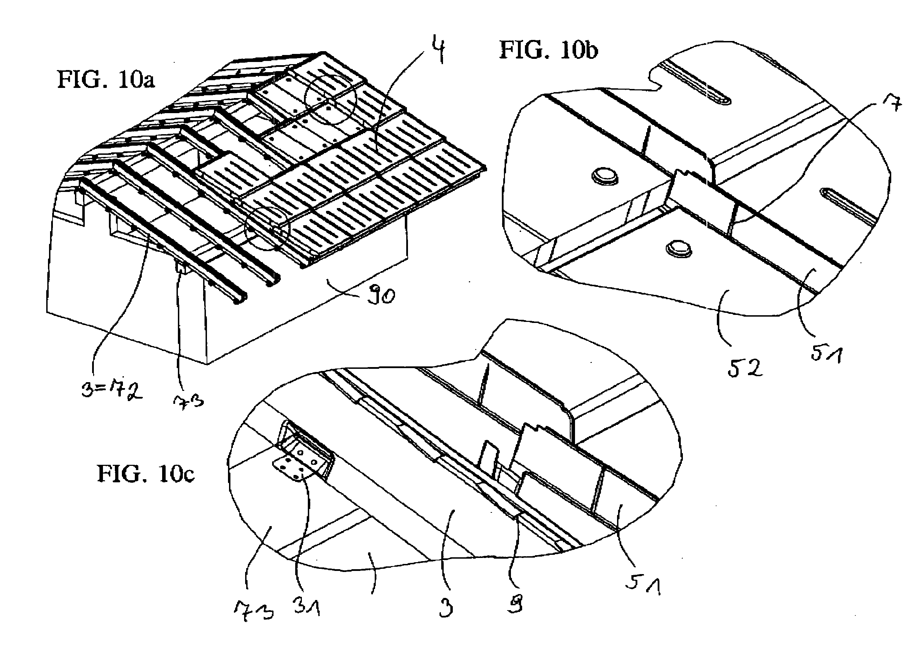

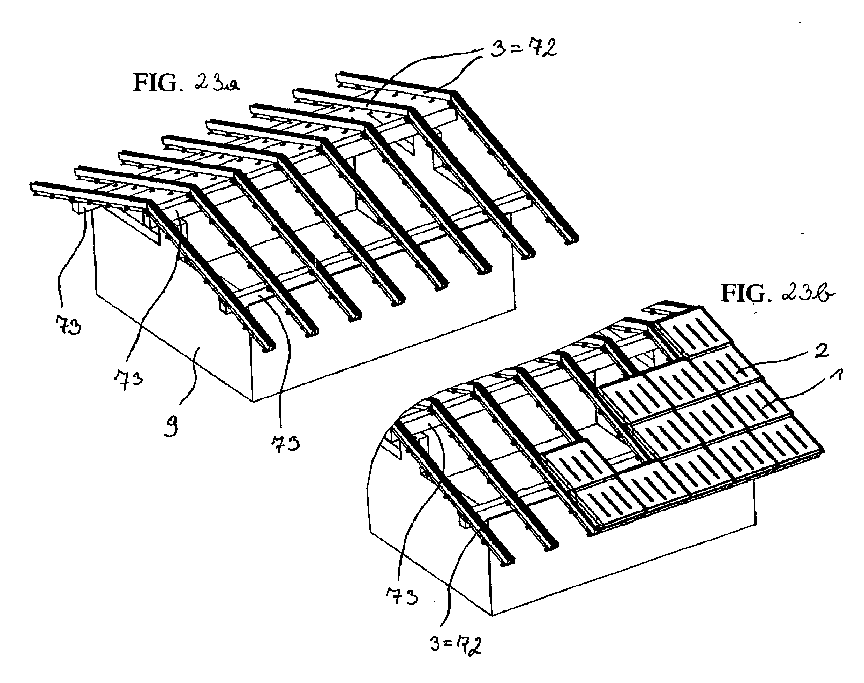

In den Fig. 10a bis 10c sowie 23a und 23b sind die schienerförmigen Bauteile 3 selbst die Dachsparren 72, die beispielsweise auch über die Befestigungslaschen 31 direkt an den Querträgern 73 angebracht bzw. montiert sind. Danach sind auf diese schienenförmigen Bauteile 3 in gleicher Art und Weise, wie bei einer vollständig separaten Dachtragekonstruktion 70 die einzelnen Dachziegel 1,2 auf die schienenförmigen Bauteile 3 aufbringbar. Auf der Unterseite des gesamten Daches 30 können dann von innen beliebige Abdeckplatten montiert werden.

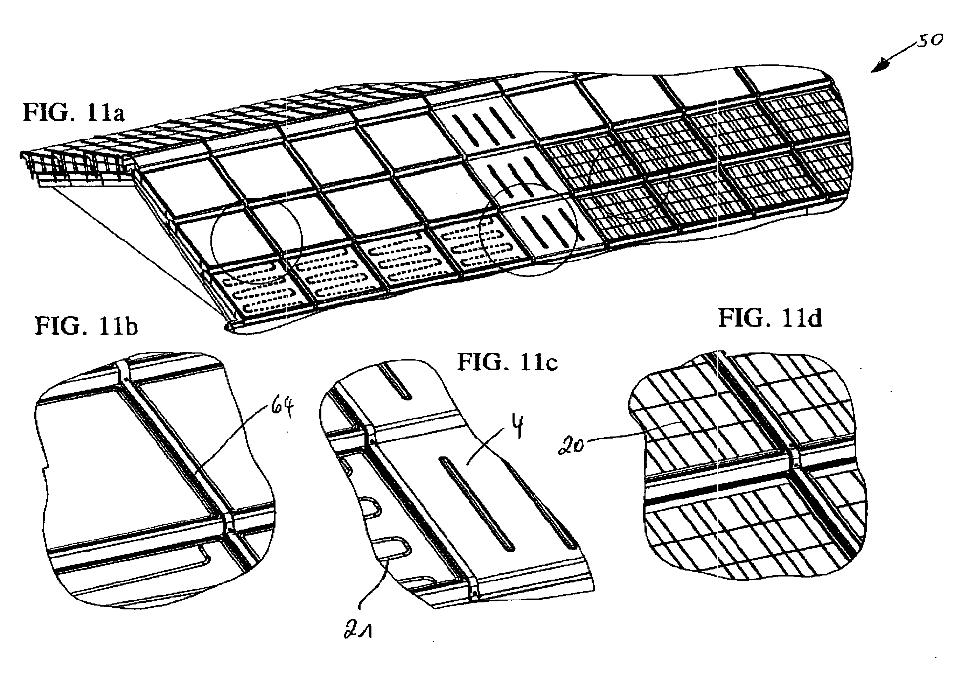

In den Fig. 11a bis 11d ist der Dachverband 50 ersichtlich, wobei unterschiedliche Arten von Dachziegeln 1,2 den Dachverband 50 bilden. Es sind dabei unterschiedliche Solarelemente 20 (Solarziegel mit Fluidleitung 21 oder Photovoltaikziegel) dargestellt. Zwischen den einzelnen Dachziegeln 1,2 kann eine zusätzliche Schutzschiene 64 der Versiegelung und der besseren Abdichtung dienen. In den Figuren sind die Schutzschiene 64 und die Abdeckschiene 63 als ein einziges Bauteil in konstruktiver Einheit ausgebildet.

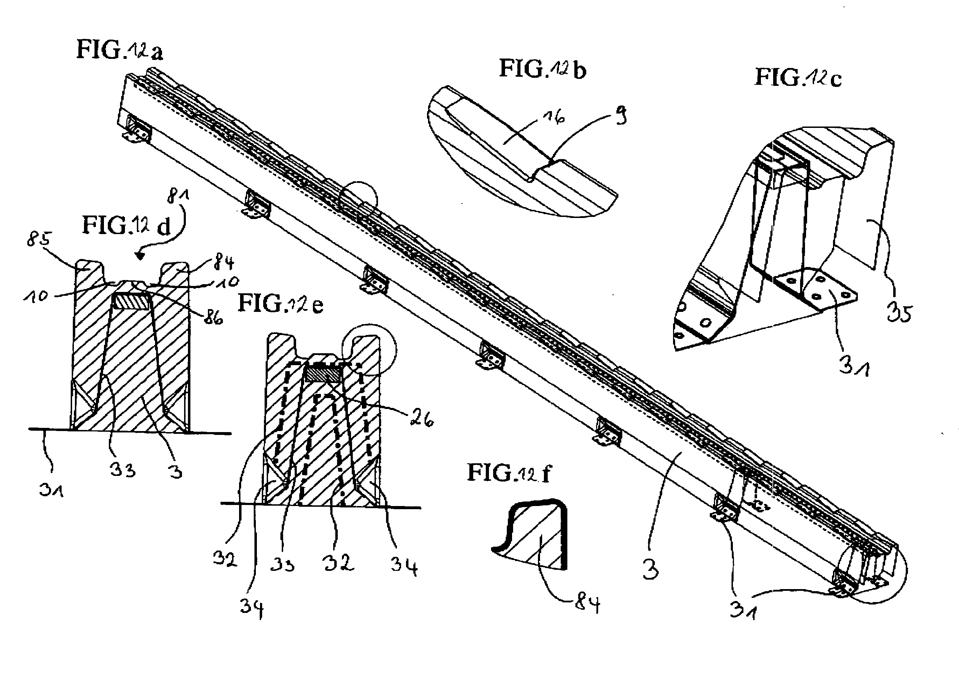

Fig. 12a zeigt das schienenförmige Bauteil 3 in seiner Gesamtausdehnung (zum Beispiel 4 Meter), wobei im vorderen Bereich (Fig. 12c) ein Anschlussstück 35 dargestellt ist. Dieses bildet eine sichere Verlängerungsmöglichkeit, wenn mehrere schienenförmige Bauteile 3 aneinandergereiht werden. Somit kann der Entwässerungskanal sicher von einem oberen zu einem unteren schienenförmigen Bauteil 3 fortgeführt werden. Das Anschlussstück 35 kann als flexibler Überstand ausgeführt werden und durch reine Anstückelung oder auch durch Verklebung mit einem weiteren schienenförmigen Bauteil 3 verbunden werden. In Fig. 12b ist die Haltestufe 9 mit entsprechender Vertiefung 16 dargestellt, in welches ein Dachziegel 1,2 mit dessen korrespondierenden Einraststufen 14 und Halteschrägen 13 passend eingreifen kann.

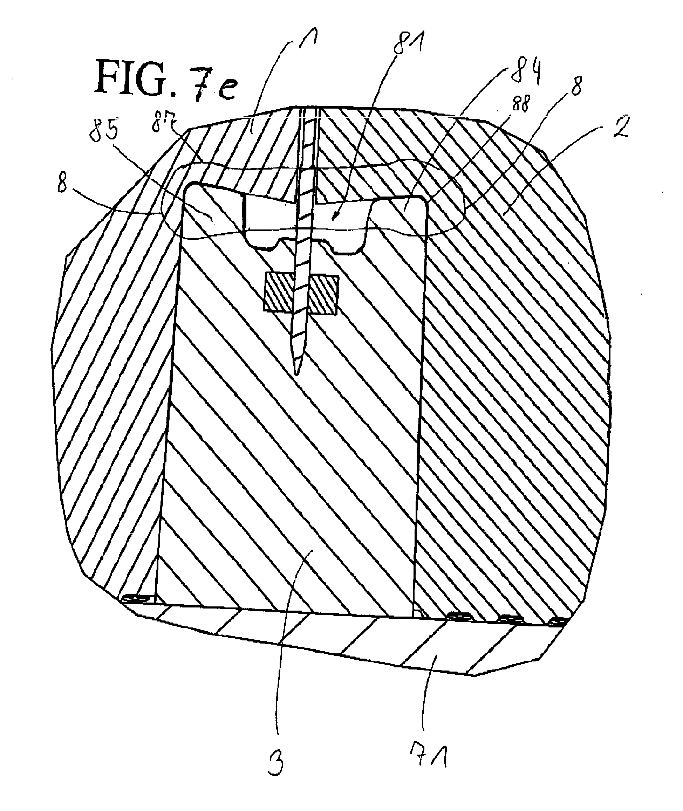

Wie in Fig. 12d und 12a ersichtlich, können die einzelnen Befestigungslaschen 31 Ober Befestigungshaken 33, die im schienenförmigen Bauteil 3 ausgebildet sind, miteinander verbunden werden, was zu einer sicheren, keine Wärmebrücke bildenden Befestigungsform führt. Die einzelnen Befestigungslaschen 31 sind über hier nicht dargestellte Befestigungsschrauben 36 am Dach 30 anbringbar. Die Befestigungslaschen 31 können über Ausbuchtungen 34 im schienenförmigen Bauteil 3 besser befestigt werden bzw. sind bei der Montage besser zugänglich. Im oberen Bereich der Fig. 12d ist die bevorzugte Querschnittsdarstellung des hier vorliegende schienenförmigen Bauteils 3 gezeigt, wobei generell die Nut 81 von den beiden Erhöhungen 85 und 84 begrenzt ist. In der Nut 81 selbst sind ein vertiefter Entwässerungskanal 10 und ein zentrales Plateau 86 ausgebildet. Bei einer besonders bevorzugten Ausführungsform der Erfindung ist vorgesehen, dass die Nut-Feder-Verbindung 8 doppelt in dem Sinne ausgeführt ist, dass einerseits der schienenförmige Bauteil 3 sowohl eine Nut 81 als auch Federn 84, 85 aufweist und andererseits an den Dachziegeln 1,2 sowohl Federn 82, 83 als auch Nuten 87, 88 angeordnet sind. Es versteht sich von selbst, dass es aber für eine erfindungsgemäße Ausführung ausreichend ist, nur eine der beiden Nut-Feder-Verbindungen 8 vorzusehen. In diesem Zusammenhang sei auf die Fig. 7e verwiesen, in welcher erkennbar ist, dass hier die Dachziegel 1, 2 keine eingreifenden Federn aufweisen. Hier besteht nur eine einzige Nut-Feder-Verbindung 8, nämlich zwischen den zwei Federn 84, 85 des schienenförmigen Bauteils 3 und Nuten 87, 88 der Dachziegel 1,2. Die Nuten 87, 88 sind hier nur einseitig geschlossen ausgebildet.

Insbesondere bei den freitragenden schienenförmigen Bauteilen 3 gemäß Fig. 10a ist es wichtig, in diesen Bauteilen 3 zusätzliche Verstärkungsschichten 32 wie beispielsweise Glasfaseermatten einzufügen. Diese sind in Fig. 12e durch die Strichpunktierung ersichtlich gemacht.

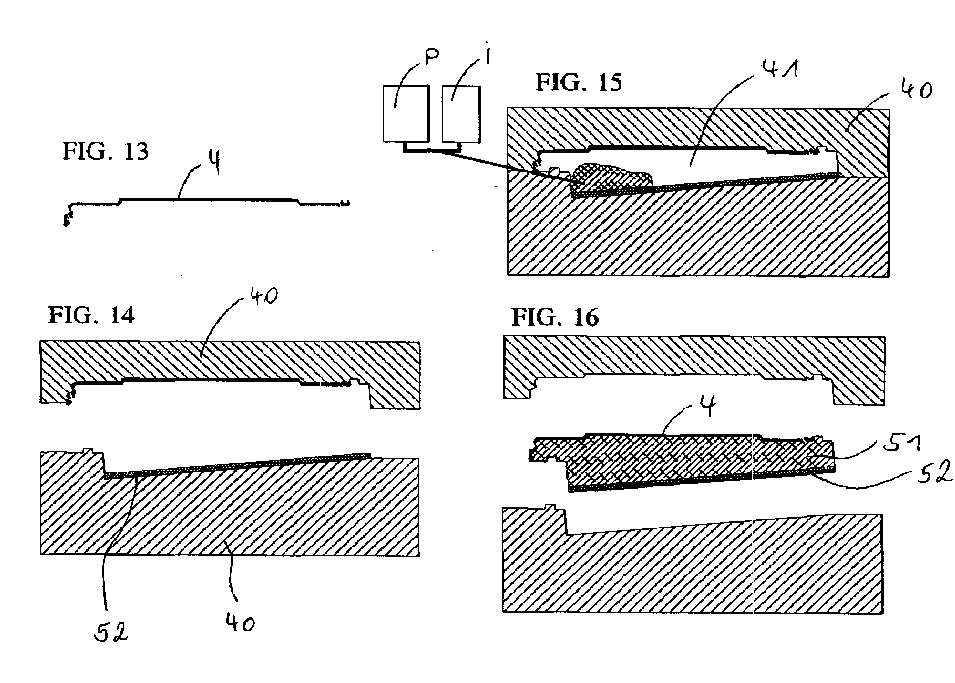

In den Fig. 13 bis 16 ist ein erstes mögliches werden zwei Herstellungsverfahren veranschaulicht. In einem ersten Schritt wird die Außenhaut 4, beispielsweise in einer Metallpresse, ausgestanzt und vorgeformt. Anschließend gelangt diese Außenhaut 4 in eine Form 40 (siehe Fig. 14), wobei im unteren Bereich der Form 40 bereits eine zweite Isolierschicht 52 eingelegt ist. In Fig. 15 ist ersichtlich, wie durch Schließen der Formhälften 40 ein Hohlraum 41 gebildet wird, in den ein schäumbarer Kunststoff eingefüllt wird, dort reagiert und aushärtet. Zwei bevorzugte Bestandteile dieses Schaumkunststoffes sind dabei Polyol P und Isocyanat 1. Nach dem Öffnen der Form 40 (siehe Fig. 16) kann der ausgehärtete Dachziegel 1 bestehend aus Außenhaut 4 und den beiden Isolierschichten 51 und 52 entnommen werden.

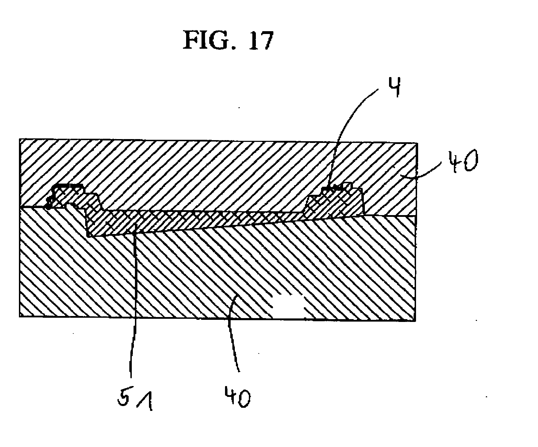

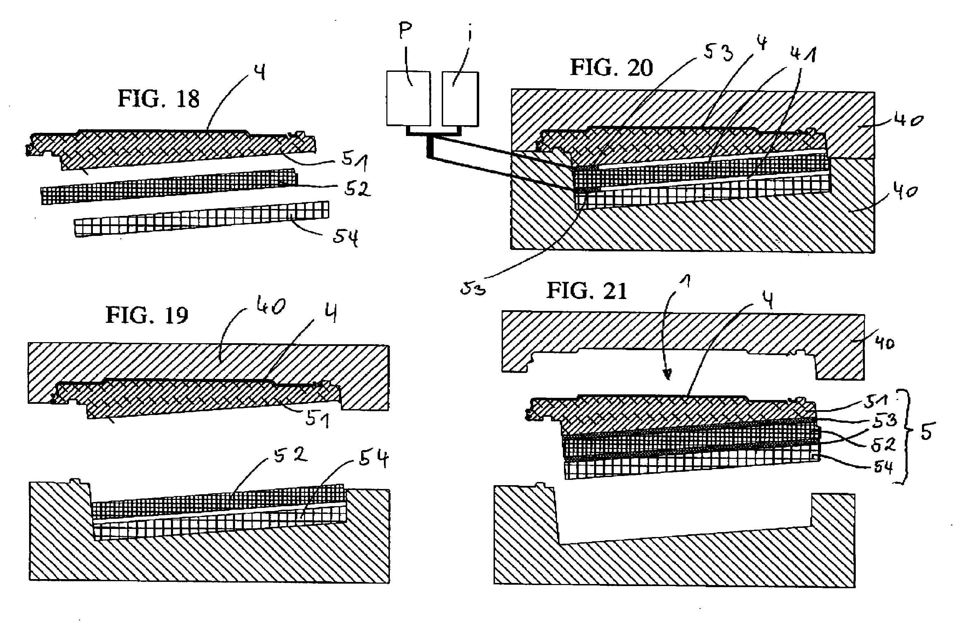

Eine zweite alternative oder auch teilweise mit der ersten kombinierbare Variante der Herstellung geht aus den Fig. 17 bis 21 hervor. Dabei wird in Fig. 17 zuerst die erste Isolierschicht 51 an die Außenhaut 4 in der Form 40 angeschäumt. Anschließend werden, wie in Fig. 18 und 19, vorgefertigte Isolierschichten 52 und 54 in die offene Form 40 eingelegt. Nach dem Schließen der Form 40 wie in Fig. 20 verbleiben zwei Hohlräume 41, in welche reagierender Schaumkunststoff eingefüllt wird. Nach dem Aushärten und Öffnen der Form 40 ergibt sich ein gesamter Dachziegel 1 bestehend aus Außenhaut 4 und Isolierkörper 5, wobei dieser Isolierkörper 5 aus den beiden Isolierschichten 51 und 52, den Zwischenschichten 53 und der weiteren Schicht 54 besteht.

In Fig. 24a ist die bisher bekannte, nachteilige Anordnung von Dachziegeln 1,2 dargestellt. Wenn nun beispielsweise der in dieser Fig. 24a mit 2 bezeichnete Dachziegel ausgetauscht werden soll, müssen alle darüber angeordneten Dachziegelreihen nacheinander abgenommen werden, um zu diesem einen Dachziegel 2 zu gelangen. Dagegen ist gemäß Fig. 24b nun der Zugang zum mit 2 bezeichneten Dachziegel bereits durch Herausnehmen, der in Dachhöhenrichtung H über ihm angeordneten weiteren Dachziegel möglich.

Durch die hier vorliegende Erfindung ist somit ein dichter Dachverband 50 mit drei wasserführenden Ebenen 91, 92, 93, einer einfacheren Austauschbarkeit von Einzelziegeln 1, 2 und einer verbesserten Vorpositionierung durch die Anbringung von schienenförmigen Bauteilen 3 gegeben.

Die schienenförmigen Bauteile 3 selbst werden bevorzugt aus Schaumkunststoff geschäumt und bilden somit bevorzugt eine weitere Isollerschicht des gesamten Dachverbandes 50. Durch den Entwässerungskanal 10 im schienenförmigen Bauteil 3 wird eine komplett unabhängige zweite Wassertrennebene 92 erreicht. Durch die Befestigung zweier Dachziegel 1, 2 an einem schienenförmigen Bauteil 3 ohne Ausbilden eines Bohrloches in den Dachziegeln 1, 2 wird eine unkomplizierte, einfache und besonders handliche Fixierung und Montage des gesamten Dachverbandes 50 erreicht.

Die oben diskutierten Maßnahmen können auch einzeln oder beliebig miteinander kombiniert bei der Erfindung vorgesehen sein.

### Bezugszeichenliste

- 1: Dachziegel
- 2: Dachziegel
- 3: schlenenförmiges Bauteil
- 4: Außenhaut
- 5: Isolierkörper
- 6: Befestigungsschraube
- 7: Vertiefung
- 8: Nut-Feder-Verbindung
- 9: Haltestufen
- 10: Entwässerungskanal
- 11: Unterseite
- 12: Oberseite
- 13: Halteschräge
- 14: Einraststufen
- 15: Breitseitenentwässerungskanal
- 20: Solarelemente
- 21: Fluidleitung
- 22: Anschlusstück
- 24: Breitseite
- 25: längsseitige Oberfläche
- 26: Einlegekern
- 27: Breitseitennut
- 28: Breitseitenfeder
- 29: Abflussbereich
- 30: Dach
- 31: Haltemittel bzw. Befestigungslasche
- 32: Verstärkungsschicht
- 33: Befestigungshaken
- 34: Ausbuchtung
- 35: Abschlussstück
- 36: Befestigungsmittel
- 40: Form
- 41: Hohlraum
- 50: Dachverband
- 51: erste Isolierschicht
- 52: zweite Isolierschicht
- 53: Zwischenschicht
- 54: weitere Schichten
- 55: Noppenstruktur
- 56: Klebeschicht
- 57: Führungsnoppen
- 58: Scheitellinie
- 61: Schraubenkopf
- 62: Kalotte
- 63: Abdeckschiene
- 64: Schutzschiene
- 70: Dachtragekonstruktion
- 71: Verschalung
- 72: Dachsparren
- 73: Querträger
- 81: Nut des schienenförmigen Bauteils 3
- 82: Feder des Dachziegels
- 83: Feder des Dachziegels
- 84: Feder bzw. Erhöhung des schienenförmigen Bauteils 3
- 85: Feder bzw. Erhöhung des schienenförmigen Bauteils 3
- 86: zentrales Plateau
- 87: Nut im Dachziegel
- 88: Nut im Dachziegel
- 90: Gebäude
- 91: erste wasserführende Ebene
- 92: zweite wasserführende Ebene
- 93: dritte wasserführende Ebene
- B: Dachbreite
- H: Dachhöhe
- P: Polyol
- I: Isocyanat

## Patentansprüche

1. Dachverband (50) mit wenigstens zwei Dachziegeln (1, 2), die über wenigstens eine Nut-Feder-Verbindung (8) miteinander verbunden bzw. verbindbar sind, wobei zur Herstellung der wenigstens einen Nut-Feder-Verbindung (8) zwischen den beiden Dachziegeln (1, 2) ein zwischen den Dachziegeln (1, 2) angeordnetes, gesondertes, schienenförmiges Bauteil (3) vorgesehen ist, wobei die wenigstens eine Nut-Feder-Verbindung (8) zwischen jedem der wenigstens zwei Dachziegel (1, 2) und dem gesonderten, schienenförmigen Bauteil (3) unabhängig vom jeweils anderen Dachziegel (1, 2) herstellbar und lösbar ist, wobei das schienenförmige Bauteil (3) eine Nut (81) aufweist und die wenigstens zwei Dachziegel (1, 2) über vorzugsweise längsseitige Federn (82, 83) in diese Nut (81) eingreifen, **dadurch gekennzeichnet, dass** im oder am schienenförmigen Bauteil (3) ein Entwässerungskanal (10) als freibleibender Teil der Nut (81) ausgebildet ist, der tiefer als die eingreifenden Federn (82, 83) der wenigstens zwei Dachziegel (1, 2) ausgebildet ist.

2. Dachverband nach Anspruch 1, **dadurch gekennzeichnet, dass** die wenigstens zwei Dachziegel (1, 2) nebeneinander, das heißt in Richtung der Dachbreite (B), im Dachverband (50) angeordnet sind.

3. Dachverband nach Anspruch 1 oder 2, **dadurch gekennzeichnet, dass** das schienenförmige Bauteil (3) über die gesamte Dachhöhe (H) ausgebildet ist.

4. Dachverband nach einem der Ansprüche 1 bis 3, **dadurch gekennzeichnet, dass** wenigstens zwei Dachziegel (1, 2) übereinander, das heißt in Richtung der Dachhöhe (H), vorzugsweise entlang der Breitseite (24) überlappend, am selben schienenförmigen Bauteil (3) angeordnet sind.

5. Dachverband nach einem der Ansprüche 1 bis 4, **dadurch gekennzeichnet, dass** das schienenförmige Bauteil (3) als Dachsparre einer Dachtragekonstruktion (70) ausgebildet ist.

6. Dachverband nach einem der Ansprüche 1 bis 5, **dadurch gekennzeichnet, dass** das schienenförmige Bauteil (3) gesondert von den wenigstens zwei Dachziegeln (1, 2) an einer Dachtragekonstruktion (70) befestigt bzw. befestigbar ist.

7. Dachverband nach einem der Ansprüche 1 bis 6, **dadurch gekennzeichnet, dass** das schienenförmige Bauteil (3) beidseitige Erhöhungen in Form von Federn (84, 85) aufweist, welche die Nut (81) im schienenförmigen Bauteil (3) begrenzen.

8. Dachverband nach Anspruch 7, **dadurch gekennzeichnet, dass** in Längsrichtung der beidseitigen Erhöhungen (84, 85), vorzugsweise in regelmäßigen Abständen, Haltestufen (9) ausgebildet sind.

9. Dachverband nach einem der Ansprüche 1 bis 8, **dadurch gekennzeichnet, dass** die Nut (81) ein zentrales Plateau (86) aufweist.

10. Dachverband nach einem der Ansprüche 1 bis 9, **dadurch gekennzeichnet, dass** im schienenförmigen Bauteil (3) ein Einlegekern (26) angeordnet ist.

11. Dachverband nach einem der Ansprüche 1 bis 10, **dadurch gekennzeichnet, dass** die wenigstens zwei Dachziegel (1, 2) das schienenförmige Bauteil (3) teilweise überdecken.

12. Dachverband nach einem der Ansprüche 1 bis 11, **dadurch gekennzeichnet, dass** die wenigstens zwei Dachziegel (1, 2) über ein zwischen den Dachziegeln (1, 2) einbringbares Befestigungsmittel, vorzugsweise eine Befestigungsschraube (6), am schienenförmigen Bauteil (3) anbringbar, vorzugsweise verschraubbar, sind.

13. Dachverband nach Anspruch 11 oder 12, **dadurch gekennzeichnet, dass** der Kopf (61) des Befestigungsmittels (6) auf beiden Dachziegeln (1, 2), vorzugsweise an deren witterungsbeständiger Außenhaut (4), gegebenenfalls über eine Kalotte 62, kraftschlüssig anliegt.

14. Schienenförmiges Bauteil (3) für einen Dachverband (50) nach einem der Ansprüche 1 bis 13, mit einer Unterseite (11), über welche das schienenförmige Bauteil (3) an Teilen einer Dachkonstruktion (70) befestigbar ist und einer Oberseite (12), wobei in oder an der Oberseite (12) eine Nut (81) mit einem tiefer liegenden Entwässerungskanal (10) ausgebildet ist.

15. Schienenförmiges Bauteil nach Anspruch 14, **dadurch gekennzeichnet, dass** im oder am schienenförmigen Bauteil (3) eine vorzugsweise durchgehende Verstärkungsschicht (32) angeordnet ist.

16. Dachziegel (1, 2) für einen Dachverband (50) nach einem der Ansprüche 1 bis 13, mit zwei Breitseiten (24) und zwei Längsseiten (25), wobei der Dachziegel (1, 2) auf beiden Längsseiten (25) eine Feder (82, 83) oder eine Nut (87, 88) für eine Nut-Feder-Verbindung (8) mit dem schienenförmigen Bauteil (3) nach Anspruch 14 oder 15 aufweist.
